Europäisches Patentamt

(19) European Patent Office

Office européen des brevets

(11) Numéro de publication: **0 006 066**

**A1**

# (12) DEMANDE DE BREVET EUROPEEN

(21) Numéro de dépôt: 79400355.8

(22) Date de dépôt: 01.06.79

(51) Int. Cl.²: **G 01 N 29/04**
**G 21 C 3/10**

(30) Priorité: 05.06.78 FR 7816716

(43) Date de publication de la demande:
12.12.79 Bulletin 79/25

(84) Etats Contractants Désignés:
BE DE GB IT

(71) Demandeur: **COMMISSARIAT A L'ENERGIE ATOMIQUE**
**Etablissement de Caractère Scientifique Technique et**
**Industriel**
**B.P. 510**
**F-75752 Paris Cedex 15(FR)**

(72) Inventeur: **Haour, Pierre**
**Le Coteau - Villa 18**
**F-13770 Venelles(FR)**

(74) Mandataire: **Mongredien, André et al,**
**c/o Brevatome 25, rue de Ponthieu**
**F-75008 Paris(FR)**

(54) Procédé de contrôle par ultrasons de la soudure entre un tube et un bouchon d'obturation du tube et bouchon adapté à la mise en oeuvre dudit procédé.

(57) La présente invention se rapporte à un procédé de contrôle par ultrasons d'une soudure (c) entre un tube (2) et un bouchon d'obturation (4) du tube. Ce procédé se caractérise en ce qu'il consiste: à ménager, d'une part, dans la paroi externe du bouchon (4), un évidement circulaire présentant une surface annulaire (8") et une surface cylindrique (8') respectivement destinées à être en contact avec l'un des bords extrêmes du tube (2) et la portion de la paroi interne dudit tube adjacente audit bord extrême du tube et, d'autre part, à l'intérieur dudit bouchon (4), une cavite (12) débouchant sur l'une de ses extrémités et s'étendant depuis cette extrémité au-delà de ladite surface annulaire (8") et, après avoir réalisé la soudure entre ladite surface annulaire et ledit bord extrême du tube (2), à contrôler par ultrasons la profondeur de la soudure (C) au voisinage de ladite surface annulaire.

Application au contrôle par ultrasons d'une soudure (C) entre un tube (2) et un bouchon d'obturation (4) de ce dernier.

FIG.2

EP 0 006 066 A1

L'invention a pour objet un procédé de contrôle par ultrasons d'une soudure entre un tube et un bouchon d'obturation de ce dernier ainsi qu'un bouchon adapté à la mise en oeuvre dudit procédé. Elle s'applique plus particulièrement au contrôle de la soudure des obturateurs d'extrémité de la gaine d'un élément combustible de réacteur nucléaire.

Antérieurement à la présente invention, il n'était pas possible de contrôler par un moyen simple non destructif une soudure entre un tube et un bouchon métalliques. Ainsi, la profondeur et le centrage du cordon de soudure d'un assemblage tube-bouchon ne pouvaient pas être vérifiés par ultrasons car la discontinuité entre les zones fondue et non fondue de l'assemblage métallique est insuffisante pour donner naissance à des réflexions décelables.

La présente invention a précisément pour objet un procédé de contrôle par ultrasons d'une soudure entre un tube et un bouchon d'obturation de ce dernier, donnant des indications aisément exploitables et n'impliquant pas de modification du soudage de nature à affaiblir l'assemblage obtenu.

Le procédé, objet de l'invention, de contrôle d'une soudure entre un tube et un bouchon d'obturation dudit tube se caractérise en ce qu'il consiste : à ménager d'une part, dans la paroi externe dudit bouchon un évidement circulaire présentant une surface annulaire et une surface cylindrique respectivement destinées à être en contact avec l'un des bords extrêmes du tube et la portion de la paroi interne dudit tube adjacente audit bord extrême du tube et, d'autre part, à l'intérieur dudit bouchon, une cavité débouchant sur l'une de ses extrémités et s'étendant depuis cette extrémité au-delà de ladite surface annulaire et, après avoir réalisé la soudure entre ladite surface annulaire et ledit bord extrême du tube, à contrôler par ultrasons la profondeur de la soudure au voisinage de ladite surface annulaire.

On note que la réalisation, dans ledit bouchon, dudit évidement circulaire et de ladite cavité permet un contrôle satisfaisant par ultrasons de la profondeur de la soudure. En effet, la réflexion d'ondes ultrasonores se propageant dans un plan parallèle à ladite surface annulaire s'effectuera sur la paroi de ladite cavité ou sur la paroi interne dudit tube selon que la profondeur de la soudure dans ledit plan d'incidence des ondes ultrasonores est supérieure ou inférieure à l'épaisseur du tube. De plus, la réalisation dudit évidement et de ladite cavité facilite le soudage en diminuant l'épaisseur de métal dans le plan de ladite surface annulaire constituant le plan de joint et en permettant ainsi une meilleure répartition des flux thermiques au voisinage de la zone à souder.

Selon l'invention, dans le but de simplifier le contrôle de la soudure par ultrasons, ladite surface annulaire est de préférence perpendiculaire à l'axe dudit tube et a de préférence une largeur égale à l'épaisseur du tube.

Selon une première variante du procédé de l'invention, le contrôle par ultrasons de la profondeur de la soudure consiste à faire défiler la soudure devant un transducteur émettant des ondes longitudinales se propageant dans un plan perpendiculaire à l'axe du tube selon le mode longitudinal et à détecter l'emplacement des échos.

Ainsi, cette variante consiste essentiellement à déterminer si la profondeur de la soudure, à une distance donnée du plan de joint, est supérieure ou inférieure à l'épaisseur du tube, ce qui permet de contrôler non seulement la pénétration de la soudure, mais également son centrage.

Selon une deuxième variante du procédé de l'invention, le contrôle de la profondeur de la soudure consiste à contrôler la soudure en la faisant défiler devant un transducteur émettant des ondes ultrasonores suivant un mode longitudinal dans un plan perpendiculaire à l'axe du tube, à déplacer le transducteur parallèlement à l'axe du tube de part et d'autre de la soudure et à détecter l'emplacement des échos.

Ainsi, cette variante permet d'évaluer la largeur axiale de pénétration de la soudure dans la portion du bouchon située à l'intérieur du tube.

L'invention a également pour objet un bouchon adapté à la mise en oeuvre du procédé caractérisé ci-dessus; ce bouchon se caractérise en ce qu'il présente, d'une part, dans sa paroi externe, un évidement circulaire présentant une surface annulaire et une surface cylindrique respectivement destinées à être en contact avec l'un des bords extrêmes du tube et la portion de la paroi interne dudit tube adjacente audit bord extrême du tube et, d'autre part, dans sa partie centrale une cavité débouchant sur l'une de ses extrémités et s'étendant depuis cette extrémité au-delà de ladite surface annulaire.

D'autres caractéristiques et avantages de la présente invention apparaîtront plus clairement à la lecture de la description qui suit d'exemples de mise en oeuvre du procédé de l'invention pour le soudage d'un bouchon d'extrémité sur la gaine d'un élément combustible de réacteur nucléaire, ces exemples étant donnés à titre illustratif mais nullement limitatif. Cette description sera faite au regard des figures schématiques annexées sur lesquelles on a représenté :

- sur les figures 1a et 1b, une gaine et un bouchon d'obturation de cette dernière destinés à être solidarisés par soudage ;

- sur la figure 2, l'assemblage gaine-bouchon après exécution d'une soudure de profondeur suffisante (traits pleins) de profondeur insuffisante ou décentrée (traits mixtes), ainsi que l'association de l'assemblage gaine-bouchon et d'un transducteur d'ultrasons pour le contrôle de la soudure ;

- sur la figure 3, un bloc diagramme de principe illustrant un mode préférentiel de contrôle par ultrasons de la soudure ;

B 6460-3 AM

4

0006066

- sur la figure 4, l'allure d'un enregistrement obtenu lors d'un contrôle effectué selon le mode de la figure 3.

Les figures la et lb montrent une gaine 2 d'élément combustible destinée à être obturée par un bouchon 4 en solidarisant par soudure l'extrémité 6 de la gaine 2 dudit bouchon 4.

A cet effet, dans la paroi externe du bouchon 4 est ménagé un évidement circulaire 8 présentant une surface cylindrique 8' de révolution par rapport à l'axe 10 de la gaine 2 et une surface annulaire 8" perpendiculaire audit axe 10, la profondeur dudit évidement 8, c'est-à-dire la largeur de ladite surface annulaire 8" étant de préférence égale à l'épaisseur e de la gaine.

De plus, ledit bouchon 4 présente une cavité débouchant sur l'une de ses extrémités (4a pour la figure la, 4b pour la figure lb), la profondeur de ladite cavité 12 étant supérieure à la distance entre ladite surface annulaire 8" et l'extrémité du bouchon opposée à celle sur laquelle débouche ladite cavité 12.

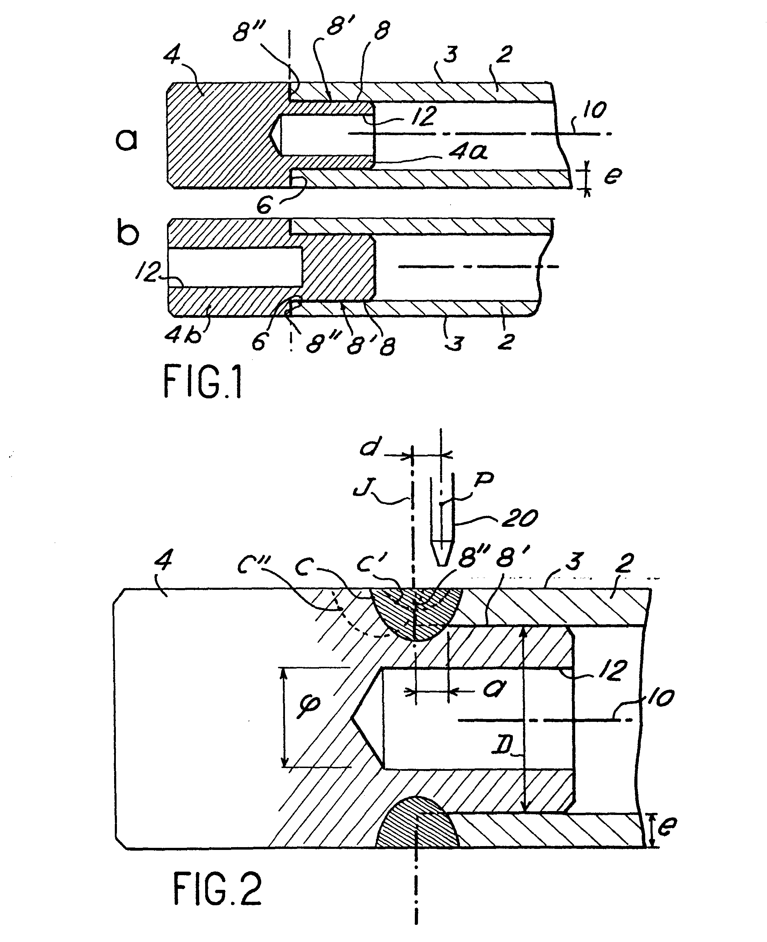

Comme représenté sur la figure 2, l'opération de soudage est ensuite effectuée dans le plan de surface annulaire 8" dit plan de joint J, ce qui conduit à l'obtention d'un cordon de soudure C ayant en coupe la forme indiquée sur la figure 2.

Selon l'invention, la profondeur et la position du cordon de soudure C sont considérées satisfaisantes lorsqu'en tout point du plan J la profondeur du cordon de soudure C est supérieure à l'épaisseur de la gaine 2, c'est-à-dire lorsque le cordon de soudure C pénètre, sur une largeur axiale a, dans la portion du bouchon 4 située à l'intérieur de ladite gaine 2.

Dans ce cas, des ondes ultrasonores se propageant, suivant un mode longitudinal, dans un plan P parallèle au plan de joint J et situé à une distance d du plan J (par exemple 2 à 3/10 de mm) inférieure ou égale à a se réfléchissent sur la paroi de la cavité 12.

B 6460-3 AM

Ainsi, la profondeur suffisante du cordon de soudure C en un point du plan P d'examen correspondra à la présence sur un écran cathodique d'échos multiples séparés d'une distance correspondant au temps nécessaire à une onde ultrasonore pour effectuer un aller et retour entre la paroi externe de la gaine 2 et la paroi de la cavité 12.

Par contre, la profondeur insuffisante du cordon de soudure C de la figure 2 correspondra à la présence sur un écran cathodique d'échos multiples renvoyés par la paroi interne de la gaine 2, c'est-à-dire séparés d'une distance correspondant au temps nécessaire à une onde ultrasonore pour parcourir un aller et retour à travers l'épaisseur e de la gaine 2. On note que la présence d'échos renvoyés dans le plan P par la paroi interne de la gaine 2 permet de déceler soit une pénétration insuffisante d'un cordon de soudure tel que le cordon C', soit un positionnement incorrect, par rapport au plan J, d'un cordon de soudure tel que le cordon C" de la figure 2.

De la description qui précède découle un premier mode de contrôle de la profondeur d'un cordon de soudure C consistant à :

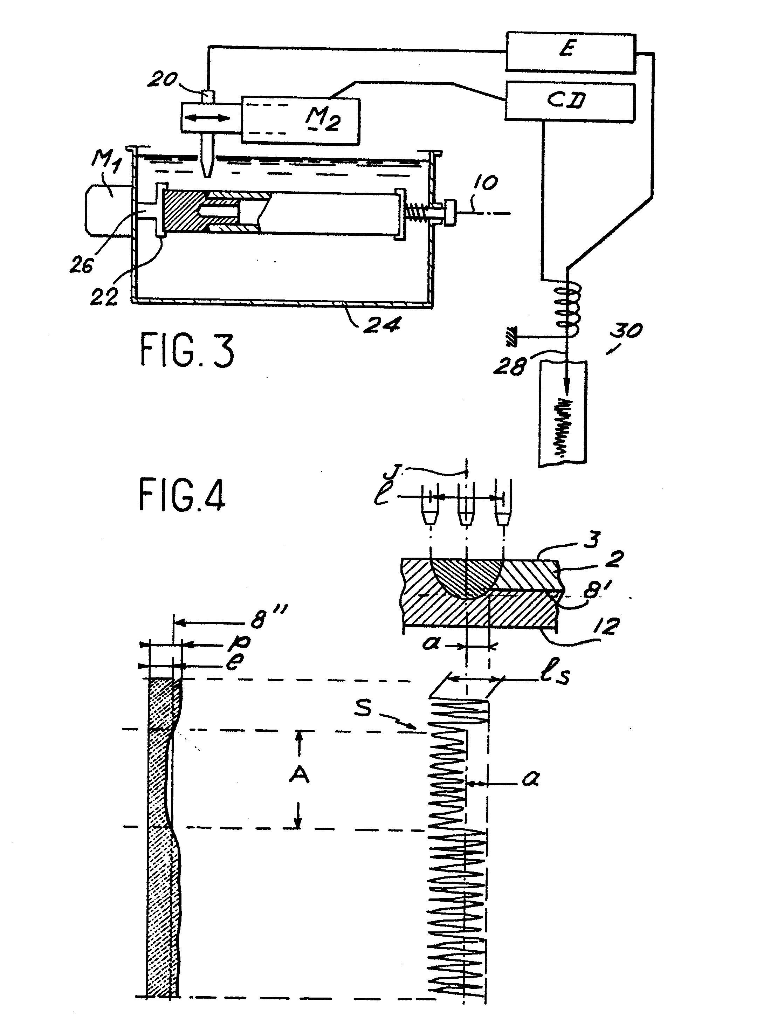

- associer à l'assemblage gaine-bouchon un transducteur 20 d'ultrasons de façon telle que l'axe d'émission de ce dernier soit dans un plan P donné et que le couplage transducteur 20 et cordon C se fasse à travers un liquide (un exemple d'association cordon C-transducteur 20 sera décrit au vu de la figure 3) ;

- faire défiler pas à pas, le cordon de soudure C devant le transducteur 20 en mettant en rotation autour de l'axe 10 l'assemblage gaine-bouchon ; à titre d'exemple si la tache focale du transducteur a un diamètre de 6/10 de mm on utilise un pas de 4 à 5/10 de mm afin que l'on obtienne ainsi un recouvrement qui permet d'explorer la soudure sur la totalité de sa longueur ;

- déterminer si les ondes ultrasonores émises par le transducteur 20 se réfléchissent, soit sur la paroi de la

B 6460-3 AM

cavité 12, soit sur la paroi interne de la gaine 2, par exemple en associant au transducteur 20 des moyens aptes à détecter soit la présence d'un écho renvoyé par la paroi de la cavité 12 soit celle d'un écho renvoyé par la paroi interne de la gaine 2.

On précise que pour effectuer de la façon précitée un contrôle satisfaisant de la pénétration du cordon de soudure C, le diamètre $\varphi$ de la cavité 12 est choisi tel que $e \leqslant \dfrac{D - \varphi}{2} \leqslant 3e$, $\underline{e}$ et D correspondant respectivement à l'épaisseur et au diamètre interne de la gaine 2.

La figure 3 présente un deuxième mode de contrôle de la profondeur du cordon de soudure C, ce mode se différenciant essentiellement du précédent par le fait que l'on effectue un contrôle plus complet du cordon de soudure C en déplaçant le transducteur 20 parallèlement à l'axe 10 de la gaine 2 de façon à évaluer sur toute la longueur du cordon de soudure C la largeur axiale $\underline{a}$ de pénétration de ce dernier dans la proportion du bouchon 4 située à l'intérieur de la gaine 2.

Sur la figure 3 on voit que l'assemblage bouchon-gaine est maintenu par des mors 22 dans un bac 24 contenant un liquide de couplage (eau en général) entre un transducteur 20 et le cordon de soudure C et est entraîné en rotation, par l'intermédiaire d'un arbre 26 mû par le moteur $M_1$.

Le transducteur 20 est accouplé à un moteur $M_2$ destiné à déplacer ce transducteur pour chacune de ses positions angulaires par rapport à l'assemblage gaine-bouchon, selon un axe parallèle à l'axe 10 sur une distance au moins égale à la largeur $\underline{1}$ (voir figure 4) de la surface de la soudure sur la paroi externe 3 de la gaine 2.

On note sur la figure 3 :
- d'une part que les mouvements de déplacements axiaux du transducteur 20 sont transmis au curseur d'inscription électrique 28 d'un enregistreur 30 par l'intermédiaire d'un capteur de déplacement CD ; et

B 6560-3 AM

- d'autre part que les signaux fournis par le transducteur 20 sont transmis audit curseur 28 par l'intermédiaire d'un ensemble électronique E tel que le curseur d'inscription ne fonctionne qu'en présence d'échos renvoyés par la paroi de la cavité 12 de l'assemblage bouchon-gaine.

L'enregistrement obtenu pour une rotation complète de l'assemblage bouchon-gaine a l'allure indiquée sur la figure 4.

Pour chaque position angulaire de l'assemblage par rapport au transducteur 20, on voit apparaître un segment S qui, résultant de la réflexion d'ondes ultrasonores sur la paroi de la cavité 12, présente une longueur $l_S$ supérieure à $\frac{1}{2}$ lorsque la profondeur du cordon de soudure C est suffisante. Ainsi, un tel enregistrement permet de déceler qu'une portion du cordon de soudure C référencée A sur la développée de ce dernier, n'est pas suffisamment pénétrante.

On note que l'écart, pour chaque position angulaire relative de l'assemblage et du transducteur, entre la longueur $l_S$ d'un segment S et la largeur $\frac{1}{2}$ correspond à la largeur axiale $\underline{a}$ de pénétration du cordon de soudure C dans la portion du bouchon 4 située à l'intérieur de la gaine 2.

Il est possible de déduire de l'enregistrement l'importance de la pénétration du cordon de soudure C au droit du plan de joint J sachant que l'on peut établir la relation $a \underset{\sim}{} k (p-e)$, p étant la profondeur du cordon de soudure C dans le plan de joint J et k un coefficient déterminé expérimentalement.

Par exemple, pour une utilisation du procédé dans les conditions suivantes :
- bouchon et gaine en acier inoxydable type 316 ;
- soudure TIG, c'est-à-dire soudure effectuée avec une électrode de tungstène et sous atmosphère d'un gaz inerte tel que l'argon ou l'hélium,
- le coefficient k a une valeur voisine de 1.

REVENDICATIONS

1. Procédé de contrôle par ultrasons d'une soudure entre un tube et un bouchon d'obturation du tube, caractérisé en ce qu'il consiste : à ménager, d'une part, dans la paroi externe du bouchon, un évidement circulaire présentant une surface annulaire et une surface cylindrique respectivement destinées à être en contact avec l'un des bords extrêmes du tube et la portion de la paroi interne dudit tube adjacente audit bord extrême du tube et, d'autre part, à l'intérieur dudit bouchon, une cavité débouchant sur l'une de ses extrémités et s'étendant depuis cette extrémité au-delà de ladite surface annulaire et, après avoir réalisé la soudure entre ladite surface annulaire et ledit bord extrême du tube, à contrôler par ultrasons la profondeur de la soudure au voisinage de ladite surface annulaire.

2. Procédé selon la revendication 1, caractérisé en ce que ladite surface annulaire est perpendiculaire à l'axe dudit tube.

3. Procédé selon l'une quelconque des revendications 1 et 2, caractérisé en ce que ladite surface annulaire a une largeur égale à l'épaisseur dudit tube.

4. Procédé selon l'une quelconque des revendications 1 à 3, caractérisé en ce que l'on contrôle la profondeur de la soudure en la faisant défiler devant un transducteur émettant des ondes ultrasonores suivant un mode longitudinal dans un plan perpendiculaire à l'axe du tube et en détectant l'emplacement des échos.

5. Procédé selon l'une quelconque des revendications 1 à 3, caractérisé en ce que l'on contrôle la soudure en la faisant défiler devant un transducteur émettant des ondes ultrasonores suivant un mode longitudinal dans un plan perpendiculaire à l'axe du tube, en déplaçant le transducteur parallèlement à l'axe du tube de part et d'autre de la soudure et en détectant l'emplacement des échos.

6. Bouchon pour la mise en oeuvre du procédé selon l'une quelconque des revendications 1 à 5, caractérisé en ce qu'il présente, d'une part, dans sa paroi externe, un évidement circulaire présentant une surface annulaire et une surface cylindrique respectivement destinées à être en contact avec l'un des bords extrêmes du tube et la portion de la paroi interne dudit tube adjacente audit bord extrême du tube, et d'autre part, dans sa partie centrale une cavité débouchant sur l'une de ses extrémités et s'étendant depuis cette extrémité au-delà de ladite surface annulaire.

ORIGINAL : Par procuration du :
COMMISSARIAT A L'ENERGIE ATOMIQUE

MONGREDIEN André

P 460-3 AM

FIG.1

FIG.2

0006066

FIG.3

FIG.4

**Office européen des brevets**

# RAPPORT DE RECHERCHE EUROPEENNE

Numéro de la demande

EP 79 40 0355

| Catégorie | DOCUMENTS CONSIDERES COMME PERTINENTS Citation du document avec indication, en cas de besoin, des parties pertinentes | Revendica-tion concernée | CLASSEMENT DE LA DEMANDE (Int. Cl.²) |
|---|---|---|---|
| A | FR - A - 1 595 830 (GLASS DEVEL-OPMENTS) <br><br> * Page 2, lignes 35-43; figure 2 * <br><br> -- | 1,4,5 | G 01 N 29/04 <br> G 21 C 3/10 |
| A | FR - A - 1 289 111 (GENERAL ELECTRIC) <br><br> * Page 3, colonne de droite, avant dernier paragraphe; page 4, colonne de gauche, premier paragraphe; fi-gures 8,9 * <br><br> -- | 1,2,6 | |
| A | US - A - 3 188 446 (W.E. RAY) <br> * Figure 1 * <br><br> ---- | 1,2,6 | **DOMAINES TECHNIQUES RECHERCHES (Int. Cl.²)** <br><br> G 01 N 29/04 <br> G 01 N 29/00 <br> G 21 C 3/30 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-08-1979 | DUCHATELLIER |

OEB Form 1503.1 06.78